# EUROPEAN PATENT SPECIFICATION

(11) **EP 1 826 524 B1**
(45) Date of publication and mention of the grant of the patent: **02.12.2009**
(21) Application number: 07102898.9
(22) Date of filing: 22.02.2007
(51) Int. Cl.: F41C 23/04, A01M 31/02

(54) **Support for a hunter**
Träger für einen Jäger
Support pour chasseur

(30) Priority: 23.02.2006 DK 200600057 U
(43) Date of publication of application: 29.08.2007
(73) Proprietor: Poulsen, Knud, 8550 Ryomgaard (DK)
(72) Inventor: Poulsen, Knud, 8550 Ryomgaard (DK)
(74) Representative: Holme Patent A/S

(56) References cited:
- DE-A1- 10 135 671
- DE-U1-202004 015 727
- US-A- 4 886 229

## Description

The invention relates to a support for keeping a user's torso still during aiming and shooting a gun.

The present invention is primarily intended for being used by hunters but can naturally also be used by the police and military.

For ethical reasons a great hitting accuracy is required during a hunt to thereby avoid that wounded animals suffer much or possibly are left behind in a helpless state.

However, the hitting accuracy with a gun depends on whether or not the shooter can hold the gun in a precise position during aiming and firing the gun.

However, this is not always the case and especially not in case of long-range shooting.

The conscientious shooter will therefore fix the position of the gun during shooting by means of a support which can be naturally occurring or purpose-made.

Supports for fixing a gun during shooting is well-known and have been the subject of many patents, of which mention can be made of e.g. US Patent No. 5,913,667 and Publication WO 95/19537.

US Patent No. 5,913,667 comprises a telescopically designed stand having an earth rod and an overlying cross bar. On the cross bar, a support for a gun is placed for keeping this gun in exact position during shooting. In principle, the shooter now only has to activate the trigger by means of a finger.

The fixation of the gun is relatively stationary whereas the animal to be shot often moves at great speed. This causes the problem that the shooter will not be able to keep pace sufficiently fast by changing the setting of the stand. This known support for a gun is therefore not suited for being used at sharpshooting.

US patent No. 4,886,229 relates to a hunting seat and support means attached to the seat, where the support means are adapted to support/hold the weapon during hunting.

Publication WO 95/19537 relates to a support for the shooter in form of a stand having an earth rod. A back rest is placed at the top of the stand, and a support seat is placed on a carriage displaceably fitted on the stand whereas an arm rest is furthermore placed on an inclined cross bar.

Contrary to the above-mentioned US Patent No. 5,913,667, it is in this case the shooter who holds the gun. During this, the support supports the lower part of the shooter's body and the arm holding the stock of the gun whereas the shooter otherwise is largely allowed to freely move the torso. The shooter is therefore not sufficiently supported to be able to perform sharpshooting.

The disadvantages that the known supports for use at shooting by means of a gun thus have are remedied according to the invention by
in a first aspect of the invention providing a support of the kind mentioned in the opening paragraph, that allows the user of the support to shoot more precisely with the gun than hitherto known,
in a second aspect of the invention providing a support of the kind mentioned in the opening paragraph, by means of which the user continuously can focus the line of sight of the gun on a moving animal,
in a third aspect of the invention providing a support of the kind mentioned in the opening paragraph that easily can be adjusted to the user's stature,
in a fourth aspect of the invention providing a support of the kind mentioned in the opening paragraph, that is convenient to use,
in a fifth aspect of the invention providing a support of the kind mentioned in the opening paragraph, that can be folded to a very small volume and therefore easily can be brought along during the hunt,
in a sixth aspect of the invention providing a support of the kind mentioned in the opening paragraph, that quickly and easily can be erected at one location and quickly and easily be moved to another location,
in a seventh aspect of the invention providing a support of the kind mentioned in the opening paragraph, that can stand stably on its own on a base.

The novel and unique feature according to claim 1 of the invention, whereby this is achieved, is the fact that the support comprises a stand for being detachably placed on a base, a pivot rod fitted on the stand by means of a swivel bearing and a strap keeping the torso of the user still during aiming and firing of a gun, said strap being fitted on the stand by means of a first end part and on the rod by means of a second end part.

By means of this arrangement, the user of the support can keep the torso and thereby indirectly the gun in such a steady state that sharpshooting can be performed.

As it is the user and not the support that now supports the gun, the user will furthermore without difficulty be able to follow a running animal or flying bird with the line of sight of the gun with great precision.

According to the invention, the strap can be fastened in desired positions on the stand and pivot rod respectively, and its length can be adjusted so that the support efficiently can be adapted to the user's stature.

According to the invention, the adaptation can take place in such a way that the user's hands and one of his armpits will rest on the strap. Thereby, the user's torso and hands are kept stably in check during shooting and the same applies to the gun held by the user who therefore can perform sharpshooting with the gun. The support keeps the gun in the same horizontal plane even when and if the shooter rotates his torso to follow the movement of an animal.

If the stand and the pivot rod are designed as telescopic rods, additional possibilities for adjusting the support are obtained according to the invention, and it will at the same time take up relatively little space in the telescoped position of the telescopic rods whereby it easily can be transported.

According to the invention, the support can be provided with a support leg pivotally mounted on the stand. This gives the advantage that the support can stand on its own on a base so that the users can leave the support when they are not shooting.

According to the invention, the support can be designed with an earth rod for being driven into the ground to thereby effectively ensure that the support is displaced in relation to the base.

According to the invention, the driving into the ground can take place simply and easily by pressing on a treadplate mounted on the stand with a foot.

The invention will be explained in greater details below, describing only exemplary embodiments and giving further advantages and technical characteristics according to the invention with reference to the drawing, in which
Fig. 1 shows a first embodiment of the support according to the invention, and
Fig. 2 shows a second embodiment of the support according to the invention.

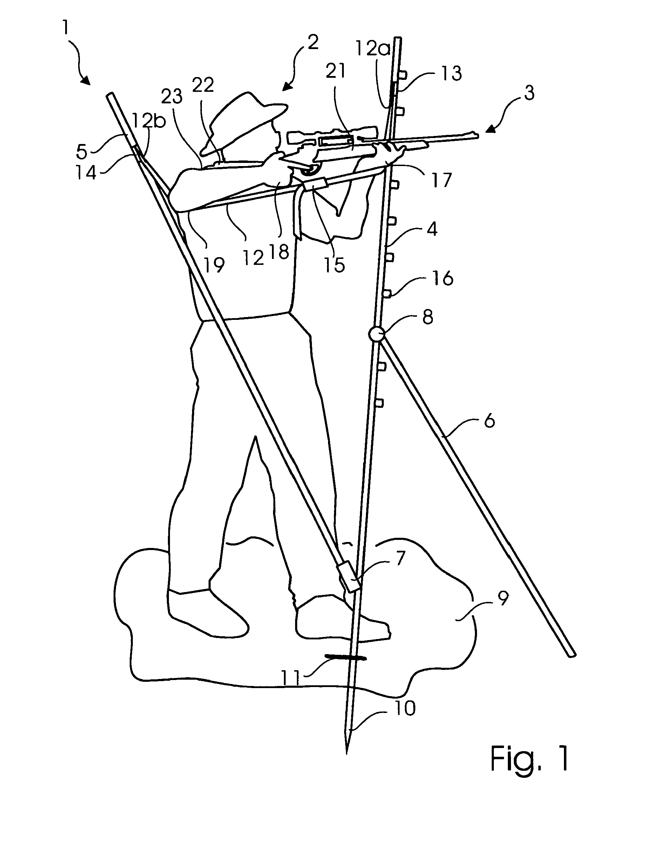

Fig. 1 shows a support 1 according to the invention and a shooter 2 using the support and during this using a gun 3.

The support 1 comprises a stand 4, a pivot rod 5 pivotally mounted on the stand 4 and a support leg 6 also pivotally mounted on the stand 4.

The pivot rod is pivotally mounted on the stand by means of a bearing 7 arranged in such a way that the pivot rod only is allowed to swing in a pre-determined plane that at the same time includes the stand 4.

The support leg is pivotally mounted on the stand by means of a second bearing 8, e.g. a ball joint, arranged so that the support leg 6 also is allowed to swing in other directions than those that are possible in said pre-determined plane. Thereby, the support 1 can be made to stand on its own on the ground 9 whereby the significant advantage is obtained in that the shooter 2 can put down the support 1 on a suitable location and use it when needed, for example when an animal or a bird appears, which is tried shot.

The lower end part of the support 1 is designed as an earth rod 10. By means of a treadplate 11 on the stand 4 the shooter will be able to effortlessly press the earth rod into the ground. In fig. 1, the earth rod has been pressed into the ground in which case the support is secured from horizontal displacement.

The support 1 furthermore comprises a strap 12 mounted, in the case shown, on the support by means of a first loop 13 on a first end part 12a of the strap 12, said loop 13 engaging around the stand 4, and a second loop 14 on a second end part 12b of the strap 12, said loop 14 engaging around the pivot rod 5.

It is noted that the strap 12 can be mounted on the support in other ways for example by means of rings or hooks.

The strap 12 is so long that it can be adjusted to the stature of the respective shooters. The adaptation takes place by manipulating a buckle 15 so that it is loosened when the length of the strap is to be lengthened or shortened and fastened when the strap has been given the desired length which thereby is maintained.

The stand is provided with a number of stops in form of pins 16. The pins 16 serve for fixing the first loop 13 of the strap 12 easily and quickly at a desired height on the stand 4. As can be seen, the many pins 16 allow for the first loop being positioned within wide limits on the stand 4.

In the figure, the first loop 13 is formed by a strap section which is fastened around the stand 4 between two pins 16.

In the same way as the stand 4, the pivot rod 5 can be designed with a number of pins (not shown) for positioning the second loop 14 engaging around the pivot rod 5.

Upon use, the adapted strap forms a rest for the left hand 17, the right hand 18 and the armpit 19 of a right-handed shooter.

A left-handed shooter will instead easily be able to use the right hand, left hand and armpit under the left arm.

The left and right hand respectively of the right-handed shooter in the figure then form a rest for the stock 21 of the gun whereas the butt 22 of the gun rests against the right shoulder 23 of the shooter, the shoulder can then safely absorb the recoil from the firing of a cartridge.

When the shooter uses the support 1 for aiming and firing, he/she takes his/her weight off on the strap whereby he/she will be able to keep at least the torso completely still. At the same time, the shooter's hands are kept completely still by their rest on the strap.

This means that the gun, which is now supported in three places by the shoulder and two hands of the shooter respectively, can be kept completely still during aiming and firing and that the shooter therefore can sharpshoot the game by means of the support according to the invention and the game will therefore not be made to suffer as it is now killed instantaneously.

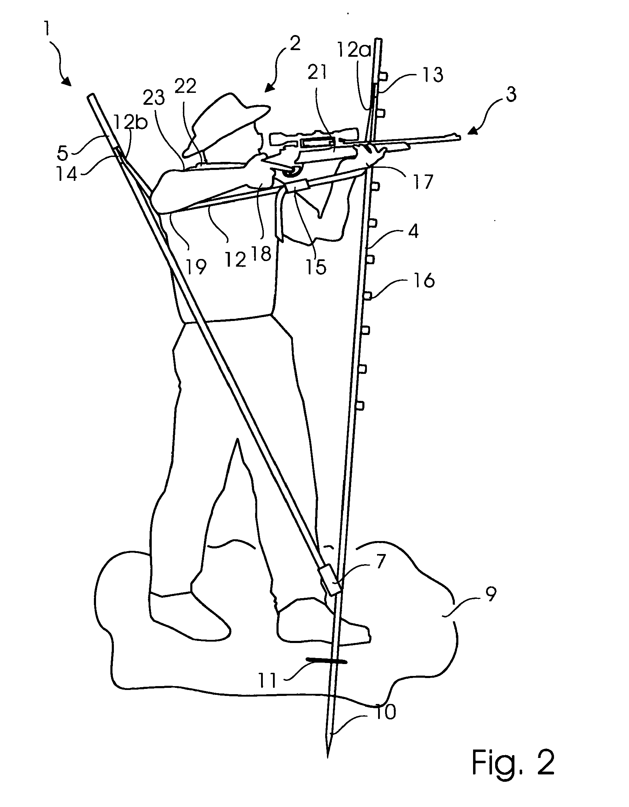

Fig. 2 shows a second embodiment of the support according to the invention. This embodiment corresponds essentially to the first embodiment of the support in fig. 1 and like parts are therefore referenced by the same reference numbers.

In this case, the support leg is not included. But the support can still stand on its own as it is held in position by the earth rod 10 of the stand 4, which is driven into the ground 9.

An animal being hunted will often try to flee. However, the shooter will be able to keep the sight of the gun on the animal by merely turning the support. Turning takes place by means of a hip turn where you do not have to move the legs from the firm foothold, and the shooter can thereby keep the sight in the same horizontal plane during turning.

In a third embodiment (not shown) the stand, the pivot rod and the support leg, if any, can be designed as telescopic rods having for example to or three telescopic lengths. Thereby, the advantage is obtained in that the support can be adjusted to three heights which allows it to be used in e.g. kneeling position.

The support is of great use to the conscientious shooter who does not want to maim the game and thereby inflict it great pain. Furthermore, the support has simple and inexpensive construction that can be folded up so that it takes up very little space and therefore easily can be brought along during the hunt, and it can be made of metal, e.g. iron or aluminium, or of a suitable plastic material which possibly is fibre-reinforced.

## Claims

1. A support (1) for keeping the torso of a user (2) still during aiming and firing of a gun, wherein the support (1) comprises a stand (4) for detachably being placed on a base (9), a pivot rod (5) fitted on the stand (4) by means of a swivel bearing (7), **characterized in that** the support (1) further comprises a strap (12) keeping the torso of the user (2) still during aiming and firing of a gun, said strap being fitted on the stand (4) by means of a first end part (12a) and on the pivot rod (5) by means of a second end part (12b).

2. A support (1) according to claim 1, **characterized in that** the strap (12) comprises a buckle (15) for allowing adjustment of the length of the strap (12).

3. A support (1) according to claim 1 or 2, **characterized in that** the support (1) comprises means (13,14;16) for fastening the end parts (12a,12b) of the strap (12) in desired position on the stand (4) and the pivot rod (5) respectively.

4. A support (1) according to claim 3, **characterized in that** the means for fastening the first end part (12a) of the strap on the stand (4) in desired positions comprises a loop (13) made on the strap (12) and engaging around the stand (4) and a number of stops (16) made on the stand (4) for keeping the loop (13) in position.

5. A support (1) according to claim 3 or 4, **characterized in that** the positions of the end parts (12a,12b) of the strap (12) and its length is adjusted so that the hands (17,18) and one armpit (19) of the user (2) are resting on the strap (12).

6. A support (1) according to any of the claims 1 - 5, **characterized in that** a telescopic rod is made on at least the stand (4).

7. A support (1) according to any of the claims 1 - 6, **characterized in that** the support (1) comprises a support leg (6) pivotally mounted on the stand (4).

8. A support (1) according to claim 7, **characterized in that** the support leg (6) is pivotally mounted on the stand (4) by means of a bearing (8).

9. A support (1) according to any of the claims 1 - 8, **characterized in that** the stand (4) is provided with an earth rod (10) for detachably fastening the stand (4) in the base (9).

10. A support (1) according to claim 9, **characterized in that** the stand (4) is provided with a treadplate (11) for by means of a foot driving the earth rod (10) down into the base (9).

## Patentansprüche

1. Eine Stütze zum Ruhighalten des Oberkörpers eines Verwenders (2) während des Zielens und Abfeuerns eines Gewehrs, wobei die Stütze (1) einen Ständer (4) zum lösbaren Anordnen auf einer Basis (9), eine Drehstange (5), die an den Ständer (4) mittels eine Schwenkgelenks (7) angesetzt ist, **dadurch gekennzeichnet, dass** die Stütze (1) weiter einen Gurt (12) aufweist, der den Oberkörper des Verwenders (2) während des Zielens und des Abschießens des Gewehrs ruhig hält, wobei der Gurt an den Ständer (4) mittels eines ersten Endteiles (12a) und an der Drehstange (5) mittels eines zweiten Endteils (12b) angesetzt ist.

2. Eine Stütze (1) nach Anspruch 1, **dadurch gekennzeichnet**, das der Gurt (12) eine Schnalle (15) zum Erlauben einer Einstellung der Länge des Gurts (12) aufweist.

3. Eine Stütze (1) nach Anspruch 1 oder 2, **dadurch gekennzeichnet, dass** die Stütze (1) Mittel (13, 14; 16) aufweist zum Befestigen der Endteile (12a, 12b) des Gurts (12) in der gewünschten Position auf dem Ständer (4) beziehungsweise der Drehstange (5).

4. Eine Stütze (1) nach Anspruch 3, **dadurch gekennzeichnet, dass** das Mittel zum Befestigen des ersten Endteils (12a) des Gurts an dem Ständer (4) in den gewünschten Positionen eine Schlaufe (13) aufweist, die an dem Gurt (12) gemacht ist und um den Ständer (4) greift und eine Anzahl von Anschlägen (16), die an dem Ständer (4) gemacht sind, um die Schlaufe (13) in Position zu halten.

5. Eine Stütze (1) nach Anspruch 3 oder 4, **dadurch gekennzeichnet, dass** die Positionen der Endteile (12a, 12b) des Gurts (12) und dessen Länge derart eingestellt sind, dass die Hände (17, 18) und eine Achsel (19) des Verwenders (2) auf dem Gurt (12) ruhen.

6. Eine Stütze (1) nach einem der Ansprüche 1 -5, **dadurch gekennzeichnet, dass** eine teleskopische Stange an dem wenigstens einen Ständer (4) ausgebildet ist.

7. Eine Stütze (1) nach einem der Ansprüche 1 -6, **dadurch gekennzeichnet, dass** die Stütze (1) einen Stützenschenkel (6) aufweist, der verschwenkbar an dem Ständer (4) befestigt ist.

8. Eine Stütze (1) nach Anspruch 7, **dadurch gekennzeichnet, dass** der Stützschenkel (6) schwenkbar an dem Ständer (4) mittels eines Lagers (8) befestigt ist.

9. Eine Stütze (1) nach einem der Ansprüche 1 - 8, **dadurch gekennzeichnet, dass** der Ständer (4) mit einer Erdstange (10) versehen ist, zum lösbaren Befestigen des Ständers (4) in dem Untergrund (9).

10. Eine Stütze (1) nach Anspruch 9, **dadurch gekennzeichnet, dass** der Ständer (4) mit einer Trittplatte (11) zum Eintreiben der Erdstange (10) in den Untergrund (9) hinein versehen ist.

## Revendications

1. Support (1) pour tenir le torse d'un utilisateur (2) en calme en visant et tirant un fusil, où le support (1) comprend un poteau (4) pour placer de manière détachable sur une base (9), un levier de pivot (5), monté au poteau (4) au moyen d'un roulement supérieur (7), **caractérisée en ce que** le support (1) comprend de plus une courroie (12) tenant le torse de l'utilisateur (2) en calme en visant et tirant le fusil, ladite courroie, montée au poteau (4) au moyen d'une première extrémité (12a) et au levier de pivot (5) au moyen d'une deuxième extrémité (12b).

2. Support (1) selon la revendication 1, **caractérisée en ce que** la courroie (12) comprend une boucle (15) pour permettre réglage du longueur de la courroie (12).

3. Support (1) selon la revendication 1 ou 2, **caractérisée en ce que** le support (1) comprend des moyens (13,14,16) pour attacher les extrémités (12a,12b) de la courroie (12) dans la position désirée respectivement au poteau (4) et au levier de pivot (5).

4. Support (1) selon la revendication 3, **caractérisée en ce que** les moyens pour fixer la première extrémité (12a) de la courroie au poteau (4) aux positions désirées comprennent une boucle (13) faite sur la courroie (12) et s'engageant autour du poteau (4) et un nombre d'arrêts (16) faits sur le poteau (4) pour garder la boucle (13) en position.

5. Support (1) selon les revendications 3 ou 4, **caractérisée en ce que** les positions des extrémités (12a, 12b) de la courroie (12) et sa longueur sont reglées, afin que les mains (17,18) et une aisselle (19) de l'utilisateur (2) s'appuient sur la courroie (12).

6. Support (1) selon une quelconque des revendications 1 - 5, **caractérisée en ce qu'**un levier télescopique est fait sur au moins le poteau (4).

7. Support (1) selon une quelconque des revendications 1 - 6, **caractérisée en ce que** le support (1) comprend un pied support (6) monté de manière pivotable sur le poteau (4).

8. Support (1) selon la revendication 7, **caractérisée en ce que** le pied support (6) est monté de maniére pivotable au poteau (4) au moyen d'un roulement (8).

9. Support (1) selon une quelconque des revendications 1 - 8, **caractérisée en ce que** le poteau (4) est fourni d'un piquet de terre (10) pour fixer le poteau (4) de manière détachable dans la base (9).

10. Support (1) selon la revendication 9, **caractérisée en ce que** le poteau (4) est fourni d'une embase de poteau (11) pour pousser au moyen des pieds le piquet de terre (10) dans la base (9).
